# EUROPEAN PATENT APPLICATION

(11) **EP 2 086 235 A1**
(43) Date of publication of application: **05.08.2009**
(21) Application number: 07846171.2
(22) Date of filing: 27.12.2007
(51) Int. Cl.: H04N 7/173

(54) **A DIGITAL TELEVISION PROGRAM SWITCHING METHOD AND A DIGITAL TELEVISION DEVICE**

(30) Priority: 11.04.2007 CN 200710079488
(71) Applicant: Huawei Technologies Co., Ltd., Longgang District, Shenzhen Guangdong 518129 (CN)
(72) Inventor: XIONG, Anyuan, Shenzhen Guangdong 518129 (CN); SHI, Ying, Shenzhen Guangdong 518129 (CN)
(74) Representative: Gulde Hengelhaupt Ziebig & Schneider
(86) International application number: PCT/CN2007/071345
(87) International publication number: WO 2008/124990

(57) **Abstract**

A method for switching a digital TV program and a digital TV device are provided. The method includes: retrieving a prestored identifier of a target VOD program and a prestored presentation position associated with the identifier of the target VOD program when a program switching from a current live program to the target VOD program is required; and performing the program switching by using the identifier of the target VOD program and the presentation position.

## Description

### CROSS REFERENCE

This application claims priority to Chinese Patent Application No. 200710079488.1, field on April 11, 2007, entitled "Method for Switching Digital TV Program and Digital TV Device", the content of which is incorporated by reference herein for all purposes.

### FIELD OF THE INVENTION

The present invention relates to digital television (TV), and more particularly, to a method for switching digital TV program and a digital TV device.

### BACKGROUND

The development of the digital TV technology accelerates the transition from home analog TV to digital TV. In a general implementation of Digital TV, digital TV programs are broadcasted over broadcast channels, and users are allowed to interact with a digital TV broadcast server over interaction channels. Compared with the traditional analog TV, the digital TV can not only provide broadcast TV service but also provide Video On Demand (VOD) service.

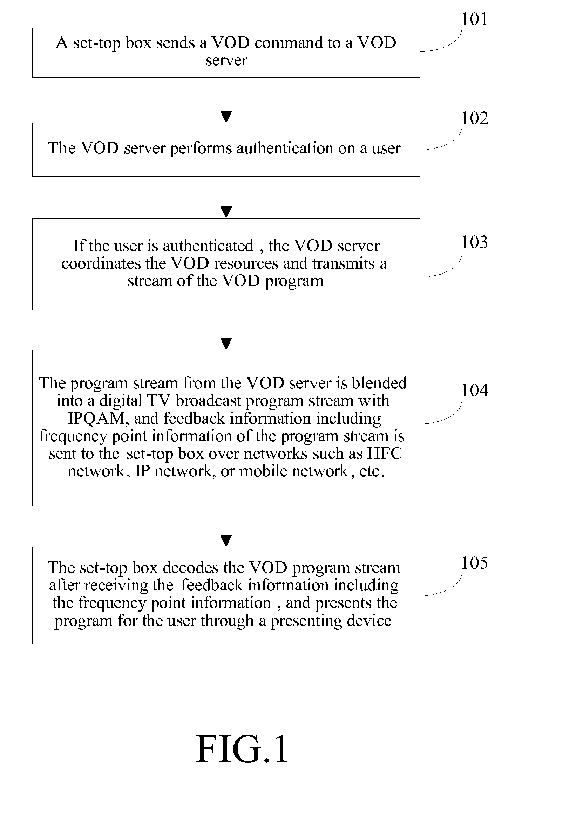

As shown in Fig. 1, a process for providing a VOD service for a user in prior art is illustrated as below.

In step 101, a user performs information interaction with a VOD server through a set-top box by operating a controlling device (such as a remote control, controlling buttons on the set-top box, and so on). The user chooses a program to be presented on demand, and the set-top box sends a VOD command to the VOD server after the program is chosen. The VOD command includes at least an identifier of the set-top box and an identifier of the program to be played on demand.

In the interactive process, the user may ascertain the program to be played on demand through one or more selections on menus displayed on a TV screen.

In step 102, the VOD server performs authentication on the user when receiving the VOD command.

The authentication includes: (a) determining whether the user has VOD right according to the set-top box identifier, and (b) determining whether the account balance of the user is enough to order the program according to the set-top box identifier and the program identifier.

In step 103, if the user is authenticated, the VOD server coordinates the VOD resources and transmits a stream of the VOD program.

In step 104, if the set-top box need receive the program stream over a Hybrid Fiber Coax (HFC) network, the program stream from the VOD server is blended into a digital TV broadcast program stream with Internet Protocol Quadrature Amplitude Modulation (IPQAM), and feedback information including frequency point information of the program stream is sent to the set-top box over networks such as HFC network, IP network, or mobile network, etc.

In step 105, if the VOD server sends the program stream over the HFC network, the set-top box decodes the VOD program stream after receiving the feedback information including the frequency point information, and presents the program for the user through a presenting device.

In above example, the set-top box receives the program stream over the HFC network. If the set-top box is an IPTV set-top box or an IPTV/DTV dual-mode set-top box, the set-top box may receive the program stream over an IP network, in this case, the steps 104 and 105 in above example should be replaced with the following steps 104' and 105'.

In step 104', the VOD server sends the VOD program stream to the set-top box over the IP network.

In step 105', the set-top box decodes the VOD program stream after receiving the VOD program stream, and presents the program for the user through a presenting device such as a television.

If the user wants to view another live program or another VOD program during the current presentation of a VOD program, the user may send a Stop command to the VOD server through the set-top box by operating the controlling device. The VOD server stops sending the program stream when receiving the Stop command, and the current process of VOD terminates.

If the user wants to resume the view of the previous VOD program after the presentation of the another living or VOD program, the user may performs the process for presenting the program on demand once again. However, the presentation of the VOD program is started from beginning when the VOD program is received and presented. The user may locate the presentation position at which last presentation of the program was stopped through device supported functions such as fast forward, jump forward, and so on. However, the operations of fast forward and jump forward bring additional workload on the user and typically cannot accurately return to the position at which the last presentation was stopped.

Therefore, in prior art, when a user wants to switch back to a VOD program which the user previously viewed incompletely, it is difficult to locate the position at which the last presentation of the program was stopped readily and accurately, and thus the user may undergo poor experience.

### SUMMARY

The present invention aims to provide a method for switching a digital TV program and a digital TV device, which allow a user to go on viewing a VOD program from the position at which last presentation of the VOD program was stopped when the user switches from another program back to the VOD program.

Embodiments of the present invention provide a method for switching a digital TV program, including: retrieving a prestored identifier of a target VOD program and a prestored presentation position associated with the identifier of the target VOD program when a program switching from a current live program to the target VOD program is required; and performing the program switching by using the identifier of the target VOD program and the presentation position.

Embodiments of the present invention provide a digital TV device, which is adapted to receive an operation command from a user, process the received command, and interacts with a VOD server and a presenting device. The digital TV device includes:

a first storing unit adapted to store an identifier of a VOD program, a presentation position at which presentation of the VOD program is stopped, and correspondence relationship between the both after receiving a command for stopping the presentation of the VOD program;

a first looking up unit adapted to look for an identifier of a target VOD program and a presentation position associated with the identifier of the target VOD program from VOD program identifiers and presentation positions stored by the first storing unit after receiving a command for switching to the target VOD program;

a first sending unit adapted to send a presentation request including the identifier of the target VOD program and the presentation position associated with the identifier of the target VOD to a VOD server when the first looking up unit finds the identifier of the target VOD program and the presentation position associated with the identifier of the target VOD.

Embodiments of the present invention provide a digital TV device, which is adapted to receive an operation command from a user, process the received command, and interacts with a VOD server and a presenting device. The digital TV device includes:

a second storing unit adapted to store an identifier of a VOD program, a segment of the VOD program with a predetermined length forward from the time at which the current presentation of the VOD program is stopped, an end presentation position of the stored segment of the VOD program, and correspondence relationship between them, after receiving a command for stopping the presentation of the VOD program;

a second looking up unit adapted to look for an identifier of a target VOD program, a segment of the target VOD program with the predetermined length and associated with the identifier of the target VOD program, and an end presentation position of the stored segment of the target VOD program from the contents stored by the second storing unit, after receiving a command for switching to the target VOD program;

a second sending unit adapted to send a presentation request including the identifier of the target VOD program and the end presentation position associated with the identifier of the target VOD to a VOD server when the second looking up unit finds the identifier of the target VOD program and the end presentation position associated with the identifier of the target VOD.

It can be seen from above technical solutions, in the method and device according to embodiments of the present invention, through storing the identifier of a VOD program which was ever viewed by the user and the presentation position at which last presentation of the VOD program was stopped, when the user switches back to view the VOD program once again, the VOD program may be automatically presented to the user from the last stopped presentation position using the stored identifier of the VOD program and the presentation position. In this way, the user's operations in this process are reduced, and the user may go on viewing the VOD program from the position at which the last presentation of the program was stopped readily and accurately, and undergo improved experience.

### BRIEF DESCRIPTION OF THE DRAWINGS

Fig. 1 is a flowchart illustrating a process for providing a VOD service for a user;

Fig. 2 is a flowchart illustrating a method for switching a digital TV program according to a first embodiment of the present invention;

Fig. 3 is a flowchart illustrating a method for switching a digital TV program according to a second embodiment of the present invention;

Fig. 4 is a flowchart illustrating a method for switching a digital TV program according to a third embodiment of the present invention;

Fig. 5 is a flowchart illustrating a method for switching a digital TV program according to a fourth embodiment of the present invention;

Fig. 6 is a flowchart illustrating a method for switching a digital TV program according to a fifth embodiment of the present invention;

### DETAILED DESCRIPTION

The present invention provides a method for switching a digital TV program and a digital TV device. In order to make principles, features and advantages of the present invention more apparent, a further detailed description for the technical solutions of the invention is given below with respect to embodiments and with reference to the accompany drawings.

Embodiments of the present invention provide a method for switching a digital TV program, including: when receiving a command for switching to a target VOD program, looking for an identifier of the target VOD program from prestored VOD program identifiers according to the command; if the target VOD program identifier is found, obtaining a presentation position associated with the target VOD program identifier according to the correspondence relationship between the prestored VOD program identifiers and presentation positions; sending a presentation request including the target VOD program identifier and the presentation position, so as to perform the program switching with the target VOD program identifier and the presentation position. Embodiments of the invention provide a digital TV device for implementing the method for switching a digital TV program. The method and device according to embodiments of the invention are detailed hereafter.

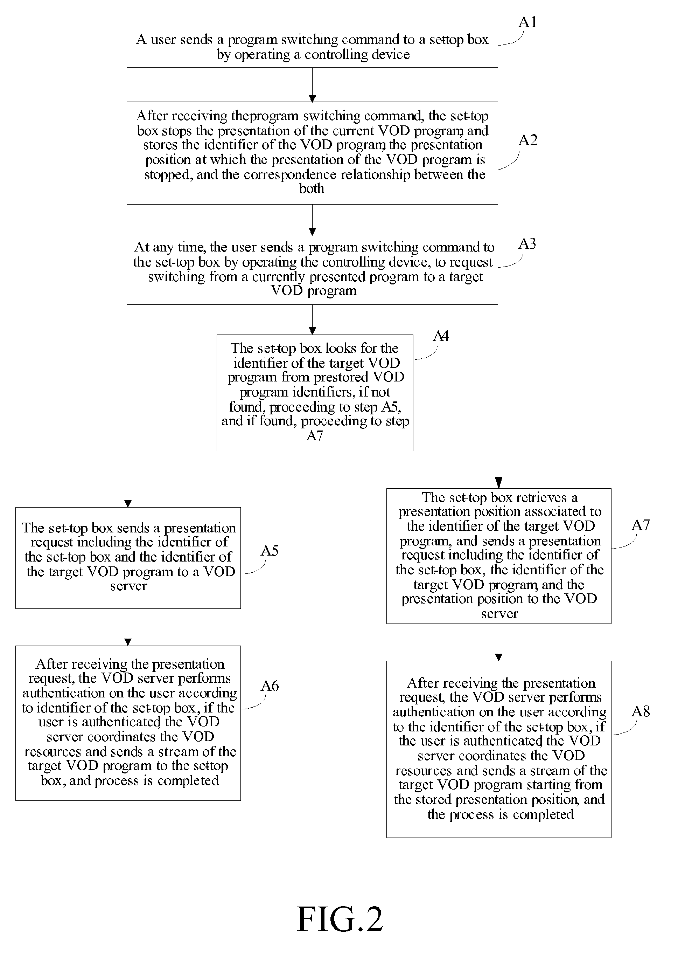

A method for switching a digital TV program according to the first embodiment as shown in Fig. 2 includes the following steps.

In step A1, a user sends a program switching command to a set-top box by operating a controlling device, such as a remote control, controlling buttons on the set-top box, and so on, to request switching from a currently presented VOD program to another program.

In step A2, after receiving the program switching command, the set-top box stops the presentation of the current VOD program, and stores the identifier of the VOD program, the presentation position at which the presentation of the VOD program is stopped, and the correspondence relationship between the identifier and the presentation position.

The presentation position refers to progress information as the user views the VOD program, and particularly the presentation position may be the current time point of the presentation or the percentage of the currently already presented portion.

The identifier of the VOD program, the presentation position at which the presentation of the VOD program is stopped, and the correspondence relationship between the both may be stored in the set-top box, and may be stored in a table, for example, as illustrated in the following table 1.

| Index | Program Identifier | Presentation Position |
|---|---|---|
| | | |
| | | |
| | | |

In step A3, at any time, the user sends a program switching command to a set-top box by operating a controlling device, such as a remote control, controlling buttons on the set-top box, and so on, to request switching from a currently presented program to a target VOD program.

In step A4, the set-top box looks for the identifier of the target VOD program from prestored VOD program identifiers. If the identifier of the target VOD program is not found, the process proceeds to step A5, and if the identifier of the target VOD program is found, the process proceeds to step A7.

In step A5, the set-top box sends a presentation request including the identifier of the set-top box and the identifier of the target VOD program to a VOD server.

In step A6, after receiving the presentation request, the VOD server performs authentication on the user according to identifier of the set-top box in the request. If the user is authenticated, the VOD server coordinates the VOD resources and sends a stream of the target VOD program to the set-top box. Then the process is completed.

By means of an example, the VOD server and the set-top box are connected over IP network in the illustration of the embodiment, however, the VOD server and the set-top box may be connected over FHC network. The process may be a little different in the case of such connection over FHC network. Particularly, the program stream from the VOD server should be blended into a digital TV broadcast program stream with IPQAM, and other steps are substantially similar to those as shown in Fig. 2. Therefore, description for the case of connection over HFC network is not provided for purpose of simplicity in this and other embodiments.

In step A7, the set-top box retrieves a presentation position associated with the identifier of the target VOD program according to the correspondence relationship between the prestored VOD program identifiers and presentation positions, and sends a presentation request including the identifier of the set-top box, the identifier of the target VOD program, and the presentation position to the VOD server.

In step A8, after receiving the presentation request, the VOD server performs authentication on the user according to the identifier of the set-top box in the request. If the user is authenticated, the VOD server coordinates the VOD resources and sends a stream of the target VOD program starting from the stored presentation position. Then the process is completed.

In above embodiment, when the user switches to the target VOD program, as it takes time for the VOD server to perform operations such as authentication, coordination of VOD resources, transmission and so on, the user has to wait for a while until the target VOD program is available for the user to view. In order to allow the user to go on viewing the target VOD program from the position at which last presentation of the program was stopped without waiting, embodiments of the present invention provides two different solutions, which are briefed in the following.

First, when the user switches from a VOD program to a live program, the connection to the VOD program is maintained. If the user wants to go on viewing the VOD program after the presentation of the live program, the maintained connection may be used directly to provide the program stream to the user.

Second, when the user stops a VOD program, a segment of the program with a predetermined length forward from the stop time, the end presentation position of the segment of the program is stored. When the user wants to view the VOD program once again, the stored segment of the program is presented firstly to the user, while a request including the end presentation position is sent to the VOD server. When the connection to the VOD server is established, the program stream provided by the VOD server may be presented from the stored end presentation position following the presentation of the stored segment.

Above solutions are detailed in the following embodiments.

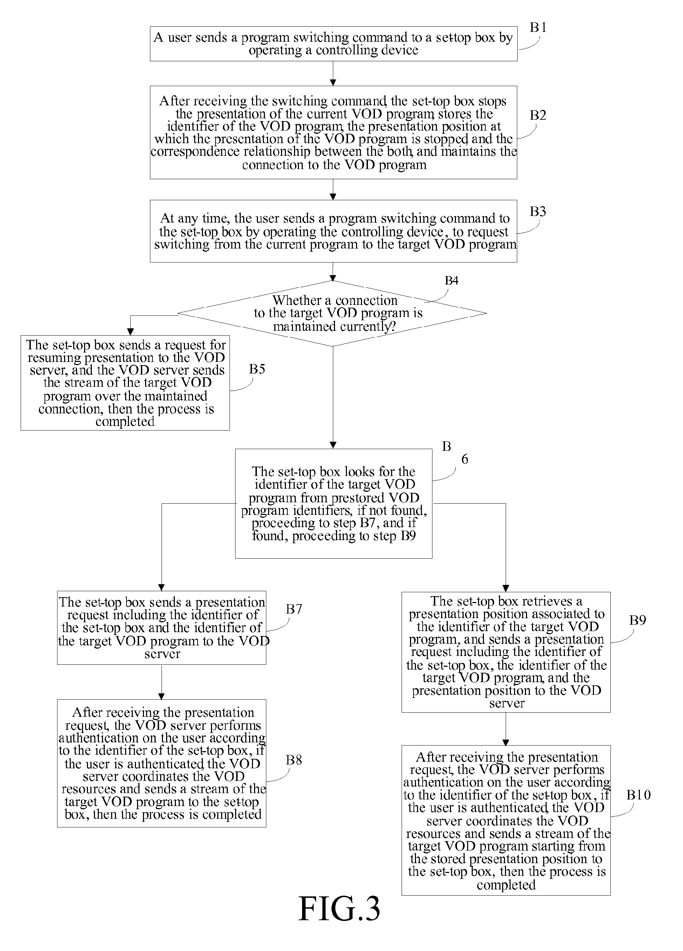

A method for switching a digital TV program according to the second embodiment as shown in Fig. 3 includes the following steps.

In step B1, a user sends a program switching command to a set-top box by operating a controlling device, such as a remote control, controlling buttons on the set-top box, and so on, to request switching from a currently presented VOD program to another live program.

In step B2, after receiving the switching command, the set-top box stops the presentation of the current VOD program, stores the identifier of the VOD program, the presentation position at which the presentation of the VOD program is stopped, and the correspondence relationship between the both, and maintains the connection to the VOD program.

In step B3, when the user wants to switch from the live program to a target VOD program, the user sends a program switching command to the set-top box by operating the controlling device, such as a remote control, controlling buttons on the set-top box, and so on, to request switching from the live program to the target VOD program.

In step B4, the set-top box determines whether a connection to the target VOD program is maintained, if the connection is maintained, the process proceeds to step B5, and if the connection is not maintained, the process proceeds to step B6.

In step B5, the set-top box sends a request for resuming presentation to the VOD server, and the VOD server sends the stream of the target VOD program over the maintained connection. Then the process is completed.

In step B6, the set-top box looks for the identifier of the target VOD program from prestored VOD program identifiers. If the identifier of the target VOD program is not found, the process proceeds to step B7, and if the identifier of the target VOD program is found, the process proceeds to step B9.

In step B7, the set-top box sends a presentation request including the identifier of the set-top box and the identifier of the target VOD program to the VOD server.

In step B8, after receiving the presentation request, the VOD server performs authentication on the user according to the identifier of the set-top box in the request. If the user is authenticated, the VOD server coordinates the VOD resources and sends a stream of the target VOD program to the set-top box. Then the process is completed.

In step B9, the set-top box retrieves a presentation position associated with the identifier of the target VOD program according to the correspondence relationship between the prestored VOD program identifiers and presentation positions, and sends a presentation request including the identifier of the set-top box, the identifier of the target VOD program, and the presentation position to the VOD server.

In step B10, after receiving the presentation request, the VOD server performs authentication on the user according to the identifier of the set-top box in the request. If the user is authenticated, the VOD server coordinates the VOD resources and sends a stream of the target VOD program starting from the stored presentation position to the set-top box. Then the process is completed.

As illustrated in the second embodiment, when the user switches to a target VOD program, the target VOD program may be presented to the user immediately by means of the maintained connection to the target program. Another specific embodiment in which the target VOD program may be presented to the user immediately after the user switches to the target VOD program is detailed hereafter.

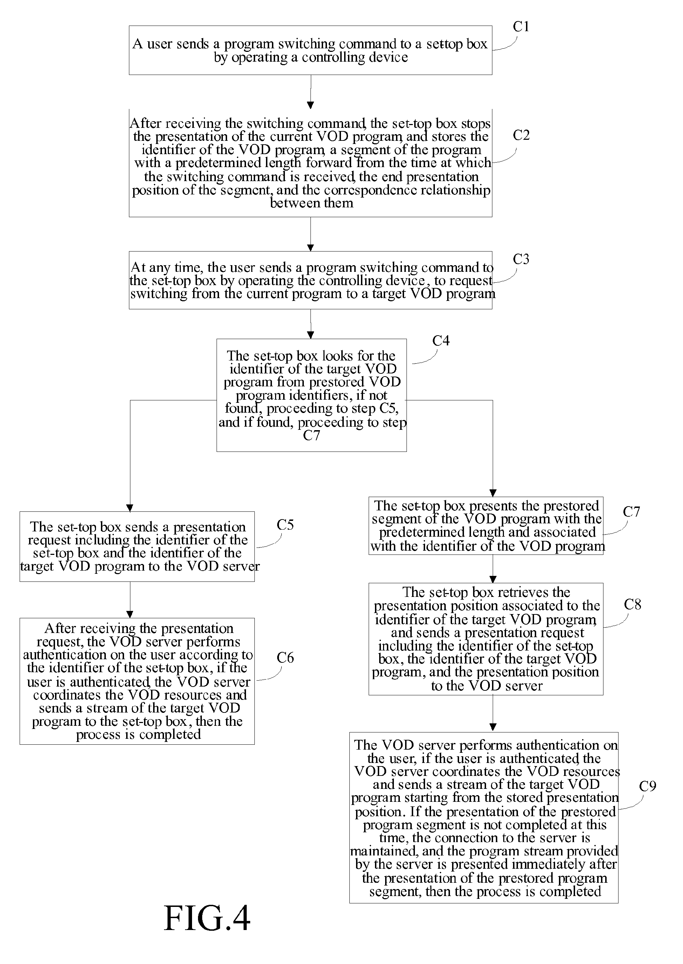

A method for switching a digital TV program according to the third embodiment as shown in Fig. 4 includes the following steps.

In step C1, a user sends a program switching command to a set-top box by operating a controlling device, such as a remote control, controlling buttons on the set-top box, and so on, to request switching from a currently presented VOD program to another program.

In step C2, after receiving the switching command, the set-top box stops the presentation of the current VOD program, and stores the identifier of the VOD program, a segment of the program with a predetermined length forward from the time at which the switching command is received, the end presentation position of the segment of the program, and the correspondence relationship between them.

The predetermined length should be long enough to allow the connection to a VOD server is established while the segment of program with the length is being presented to the user.

In step C3, at any time, the user sends a program switching command to the set-top box by operating the controlling device, such as a remote control, controlling buttons on the set-top box, and so on, to request switching from the current program to a target VOD program.

In step C4, the set-top box looks for the identifier of the target VOD program from prestored VOD program identifiers. If the identifier of the target VOD program is not found, the process proceeds to step C5, and if the identifier of the target VOD program is found, the process proceeds to step C7.

In step C5, the set-top box sends a presentation request including the identifier of the set-top box and the identifier of the target VOD program to the VOD server.

In step C6, after receiving the presentation request, the VOD server performs authentication on the user according to the identifier of the set-top box in the request. If the user is authenticated, the VOD server coordinates the VOD resources and sends a stream of the target VOD program to the set-top box. Then the process is completed.

In step C7, the set-top box presents the prestored segment of the VOD program with the predetermined length and associated with the identifier of the VOD program.

In step C8, the set-top box retrieves the presentation position associated with the identifier of the target VOD program according to the correspondence relationship between the prestored VOD program identifiers and presentation positions, and sends a presentation request including the identifier of the set-top box, the identifier of the target VOD program, and the presentation position to the VOD server.

In step C9, after receiving the presentation request, the VOD server performs authentication on the user according to the identifier of the set-top box in the request. If the user is authenticated, the VOD server coordinates the VOD resources and sends a stream of the target VOD program starting from the stored presentation position. If the presentation of the prestored segment of the program is not completed at this time, the connection to the server is maintained, and the program stream provided by the server is presented immediately after the presentation of the prestored segment of the program. Then the process is completed.

In above embodiment, steps C7, C8, and C9 may be performed in any order, and may be performed simultaneously. Generally, the stored program segment is firstly presented to the user, then the presentation request is sent to the VOD server, then after the program stream sent from the server is received, the received program is presented immediately after the presentation of the stored program segment. In this way, the user may view the VOD program immediately without waiting.

In above embodiment, what is stored is a segment of a VOD program with a predetermined length forward from the time at which the presentation of the VOD program is stopped, alternatively, what is stored may be a program segment with a predetermined length backward from the stop time, and alternatively, what is stored may be a program segment with a predetermined length both backward and forward from the stop time. Different ways to store the program segment may bring different experiences for the user to view the program.

In above embodiment, when the user switches from a VOD program to another program, the set-top box automatically stores the presentation position of the VOD program. Sometimes the user does not want to store the presentation position, therefore the user should be enabled to choose whether to store the presentation position of the VOD program. In this way, the user's experience may be improved.

Embodiments of the present invention provide a technical solution in which a user may selectively store presentation position of a VOD program. Detailed depiction is provided hereafter.

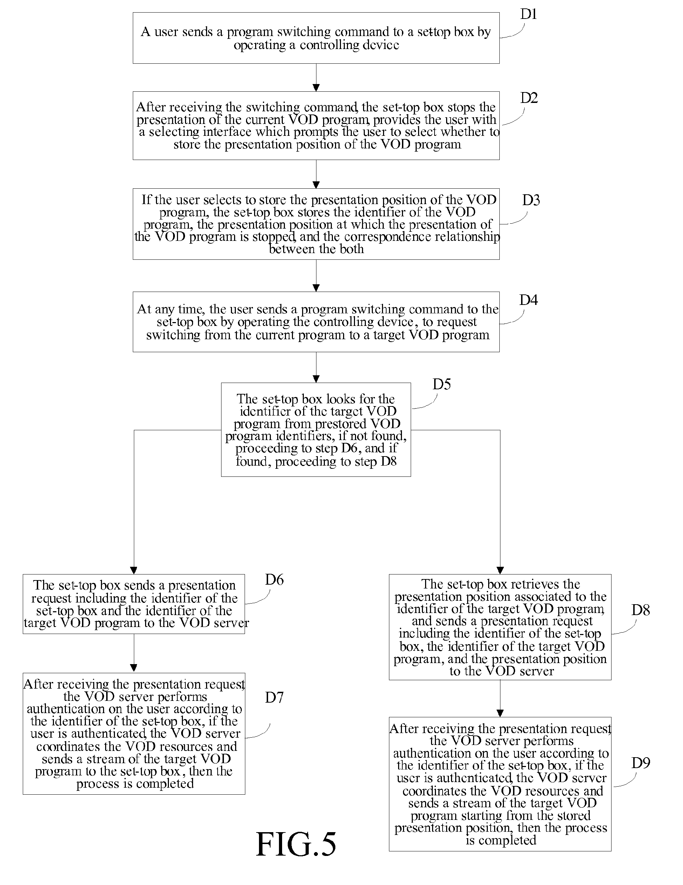

A method for switching a digital TV program according to the fourth embodiment as shown in Fig. 5 includes the following steps.

In step D1, a user sends a program switching command to a set-top box by operating a controlling device, such as a remote control, controlling buttons on the set-top box, and so on, to request switching from a currently presented VOD program to another program.

In step D2, after receiving the switching command, the set-top box stops the presentation of the current VOD program, provides the user with a selecting interface which prompts the user to select whether to store the presentation position of the VOD program.

In step D3, if the user selects to store the presentation position of the VOD program, the set-top box stores the identifier of the VOD program, the presentation position at which the presentation of the VOD program is stopped, and the correspondence relationship between the both.

In step D4, at any time, the user sends a program switching command to the set-top box by operating the controlling device, such as a remote control, controlling buttons on the set-top box, and so on, to request switching from the current program to a target VOD program.

In step D5, the set-top box looks for the identifier of the target VOD program from prestored VOD program identifiers. If the identifier of the target VOD program is not found, the process proceeds to step D6, and if the identifier of the target VOD program is found, the process proceeds to step D8.

In step D6, the set-top box sends a presentation request including the identifier of the set-top box and the identifier of the target VOD program to the VOD server.

In step D7, after receiving the presentation request, the VOD server performs authentication on the user according to the identifier of the set-top box in the request. If the user is authenticated, the VOD server coordinates the VOD resources and sends a stream of the target VOD program to the set-top box. Then the process is completed.

In step D8, the set-top box retrieves the presentation position associated with the identifier of the target VOD program according to the correspondence relationship between the prestored VOD program identifiers and presentation positions, and sends a presentation request including the identifier of the set-top box, the identifier of the target VOD program, and the presentation position to the VOD server.

In step D9, after receiving the presentation request, the VOD server performs authentication on the user according to the identifier of the set-top box in the request. If the user is authenticated, the VOD server coordinates the VOD resources and sends a stream of the target VOD program starting from the stored presentation position. Then the process is completed.

In above embodiment, when the presentation of the current VOD program is stopped, the user may be firstly prompted to select whether to store the presentation position of the VOD program. Similarly, when a VOD program is presented to the user, the user may be firstly prompted to select whether to present the program from the stored presentation position.

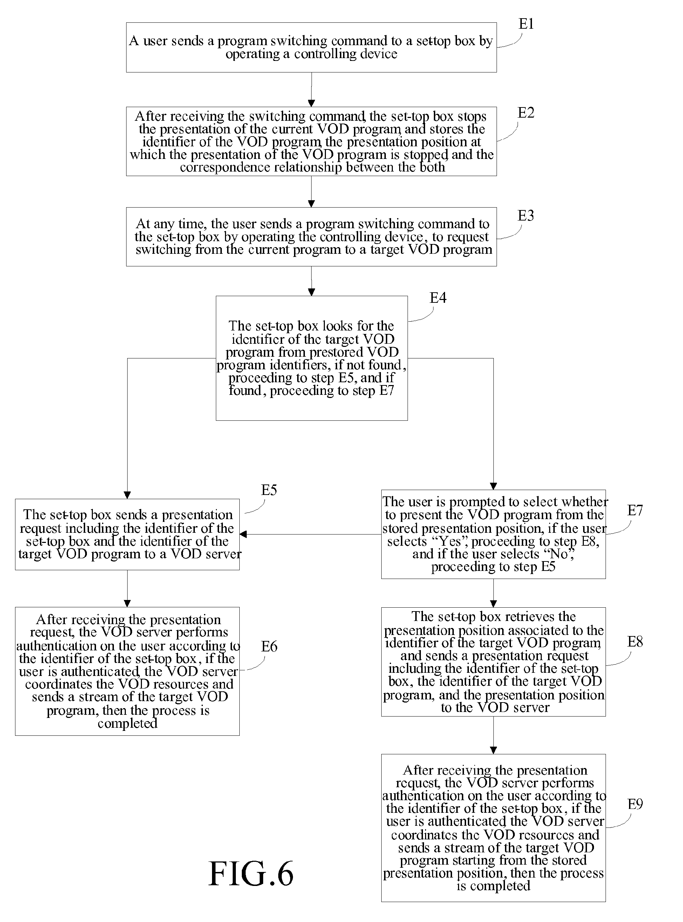

A method for switching a digital TV program according to the fifth embodiment as shown in Fig. 6 includes the following steps.

In step E1, a user sends a program switching command to a set-top box by operating a controlling device, such as a remote control, controlling buttons on the set-top box, and so on, to request switching from a currently presented VOD program to another program.

In step E2, after receiving the switching command, the set-top box stops the presentation of the current VOD program, and stores the identifier of the VOD program, the presentation position at which the presentation of the VOD program is stopped, and the correspondence relationship between the identifier and the presentation position.

In step E3, at any time, the user sends a program switching command to the set-top box by operating the controlling device, such as a remote control, controlling buttons on the set-top box, and so on, to request switching from the current program to a target VOD program.

In step E4, the set-top box looks for the identifier of the target VOD program from prestored VOD program identifiers. If the identifier of the target VOD program is not found, the process proceeds to step E5, and if the identifier of the target VOD program is found, the process proceeds to step E7.

In step E5, the set-top box sends a presentation request including the identifier of the set-top box and the identifier of the target VOD program to a VOD server.

In step E6, after receiving the presentation request, the VOD server performs authentication on the user according to the identifier of the set-top box in the request. If the user is authenticated, the VOD server coordinates the VOD resources and sends a stream of the target VOD program. Then the process is completed.

In step E7, the set-top box provides a selecting interface which prompts the user to select whether to present the VOD program from the stored presentation position. If the user selects to present the VOD program from the stored presentation position, the process proceeds to step E8, and if the user selects not to present the VOD program from the stored presentation position, the process proceeds to step E5.

In step E8, the set-top box retrieves the presentation position associated with the identifier of the target VOD program according to the correspondence relationship between the prestored VOD program identifiers and presentation positions, and sends a presentation request including the identifier of the set-top box, the identifier of the target VOD program, and the presentation position to the VOD server.

In step E9, after receiving the presentation request, the VOD server performs authentication on the user according to the identifier of the set-top box in the request. If the user is authenticated, the VOD server coordinates the VOD resources and sends a stream of the target VOD program starting from the stored presentation position. Then the process is completed.

It can be seen from above description, in the method for switching a digital TV program according to embodiments of the present invention, when a user switches back to a VOD program which was ever viewed recently by the user, the program may be automatically presented to the user from the position at which last presentation of the program was stopped. In this way, the user's time is saved and the user's experience is improved.

Moreover, embodiments of the present invention provide a technical solution in which the connection to a VOD program is maintained when the user switches from the VOD program to a live program. Then, the user may switch from the live program back to the VOD program without waiting. In this way, the drawback that the user typically need wait for a while until the target VOD program is available for the user to view is overcome, and the user's experience is improved.

Embodiments of the present invention further provide a technical solution in which a segment of a VOD program is stored when the user stops the presentation of the VOD program. The user may view the segment of the VOD program immediately after the user switches back to the VOD program without waiting, the connection to the VOD server is established while the stored segment of the program is being presented to the user. In this way, the user's time is saved and the user's experience is improved.

Embodiments of the present invention further provide a technical solution in which the user may select whether to store the presentation position or the user may select whether to present the VOD program from the stored presentation position. In this way, the habit and personal willingness of the user are taken into account, so that the user's experience is further improved.

Embodiments of the present invention further provide a digital TV device, which is adapted to receive an operation command from a user, process the received command, and interacts with a VOD server and a presenting device. The digital TV device includes:

a storing unit adapted to store an identifier of a VOD program, a presentation position at which the presentation of the VOD program is stopped, and the correspondence relationship between the both after receiving a command for stopping the presentation of the VOD program;

a looking up unit adapted to look for an identifier of a target VOD program and a presentation position associated with the identifier of the target VOD program from VOD program identifiers and presentation positions stored by the storing unit after receiving a command for switching to the target VOD program;

a sending unit adapted to send a presentation request including the identifier of the target VOD program and the presentation position associated with the identifier of the target VOD to a VOD server when the looking up unit finds the identifier of the target VOD program and the presentation position associated with the identifier of the target VOD.

The basic purpose of the present invention may be achieved through above digital TV device. In order to get further advantageous effect, according to embodiments of the present invention, above mentioned digital TV device may be further improved in the following way.

A connection maintaining unit and a connection determining unit are added.

The connection maintaining unit is adapted to maintain connection to a VOD program after receiving a command for switching from the VOD program to a live program.

The connection determining unit is adapted to determine whether connection to a VOD program is maintained currently after receiving a command for switching to the VOD program.

The sending unit is further adapted to send a request for resuming presentation of the VOD program to the VOD server after the connection determining unit determines that the connection to the VOD program is maintained currently.

Embodiments of the present invention further provide a digital TV device, which is adapted to receive an operation command from a user, process the received command, and interacts with a VOD server and a presenting device. The digital TV device includes:

a storing unit adapted to store an identifier of a VOD program, a segment of the VOD program with a predetermined length forward from the time at which the current presentation of the VOD program is stopped, an end presentation position of the stored segment of the VOD program, and correspondence relationship between them, after receiving a command for stopping the presentation of the VOD program;

a looking up unit adapted to look for an identifier of a target VOD program, a segment of the target VOD program with the predetermined length and associated with the identifier of the target VOD program, and the end presentation position of the stored segment of the target VOD program from the contents stored by the storing unit, after receiving a command for switching to the target VOD program;

a sending unit adapted to send a presentation request including the identifier of the target VOD program and the end presentation position associated with the identifier of the target VOD to the VOD server when the looking up unit finds the identifier of the target VOD program and the end presentation position associated with the identifier of the target VOD.

The digital TV device according to embodiments of the present invention may further include a presenting unit adapted to present the prestored segment of the target VOD program with the predetermined length and associated with the identifier of the target VOD program, and present the target VOD program from the end presentation position immediately after the presentation of the prestored segment of the target VOD program.

In order to facilitate the user, the digital TV device may further include a prompting unit adapted to prompt the user, via a selecting interface, to select whether to store above mentioned information and the correspondence relationship, and/or prompt the user to select whether to start presenting the target VOD program from the end presentation position.

Detailed description is provided to a method for switching a digital TV program and a digital TV device of the present invention. Specific embodiments are provided herein to illustrate the principle of the present invention, but description of the embodiments just intends to help understand the basic idea of the present invention, it is apparent for those skilled in the art that any modification, variation, and substitution may be made to the illustrated embodiments without departing from the spirit and scope of the invention, and the specific embodiments should not be interpreted as limitation to the present invention.

## Claims

1. A method for switching a digital television (TV) program, comprising:
retrieving a prestored identifier of a target Video On Demand (VOD) program and a prestored presentation position associated with the identifier of the target VOD program when a program switching from a current live program to the target VOD program is required; and
performing the program switching by using the identifier of the target VOD program and the presentation position.

2. The method for switching a digital TV program according to claim 1, further comprising:
storing an identifier of a VOD program, a presentation position at which presentation of the VOD program is stopped, and correspondence relationship between the both, after receiving a command for stopping the presentation of the VOD program.

3. The method for switching a digital TV program according to claim 2, wherein the performing the program switching by using the identifier of the target VOD program and the presentation position further comprises:
presenting the target VOD program starting from the presentation position.

4. The method for switching a digital TV program according to claim 1, further comprising:
storing an identifier of a VOD program, a segment of the VOD program with a predetermined length forward from the time at which current presentation of the VOD program is stopped, an end presentation position of the stored segment of the VOD program, and correspondence relationship between them, after receiving a command for stopping the presentation of the VOD program.

5. The method for switching a digital TV program according to claim 4, wherein the performing the program switching by using the identifier of the target VOD program and the presentation position further comprises:
presenting prestored segment of the target VOD program with the predetermined length and associated with the identifier of the target VOD program, and
presenting the target VOD program from the end presentation position immediately after the presentation of the prestored segment of the target VOD program.

6. The method for switching a digital TV program according to claim 2 or 4, further comprising:
prompting a user, via a selecting interface, to select whether to store the information and the correspondence relationship after receiving the command for stopping the presentation of the VOD program; and
storing the information and the correspondence relationship when receiving a positive response for performing the storing from the user.

7. The method for switching a digital TV program according to claim 3 or 5, further comprising:
prompting a user, via a selecting interface, to select whether to start presenting the target VOD program from the prestored presentation position, before presenting the target VOD program; and
sending a presentation request including the identifier of the target VOD program and the presentation position when receiving a response for presenting the VOD program from the prestored presentation position from the user.

8. The method for switching a digital TV program according to claim 1, further comprising:
receiving a command for stopping presentation of a VOD program and switching to a live program; and
maintaining connection to the VOD program.

9. The method for switching a digital TV program according to claim 8, before the retrieving a prestored identifier of a VOD program and a prestored presentation position associated with the identifier of the target VOD program, further comprising:
sending a request for resuming presentation if a connection to the target VOD program is maintained currently.

10. A digital television (TV) device, comprising:
a first storing unit adapted to store an identifier of a Video On Demand (VOD) program, a presentation position at which presentation of the VOD program is stopped, and correspondence relationship between the both after receiving a command for stopping the presentation of the VOD program;
a first looking up unit adapted to look for an identifier of a target VOD program and a presentation position associated with the identifier of the target VOD program from VOD program identifiers and presentation positions stored by the first storing unit after receiving a command for switching to the target VOD program; and
a first sending unit adapted to send a presentation request including the identifier of the target VOD program and the presentation position associated with the identifier of the target VOD to a VOD server when the first looking up unit finds the identifier of the target VOD program and the presentation position associated with the identifier of the target VOD.

11. The digital TV device according to claim 10, further comprising:
a connection maintaining unit adapted to maintain connection to a VOD program after receiving a command for switching from the VOD program to a live program; and
a connection determining unit adapted to determine whether connection to a VOD program is maintained currently after receiving a command for switching to the VOD program;
wherein the sending unit is further adapted to send a request for resuming presentation of the VOD program to the VOD server after the connection determining unit determines that the connection to the VOD program is maintained currently.

12. A digital television (TV) device, comprising:
a second storing unit adapted to store an identifier of a Video On Demand (VOD) program, a segment of the VOD program with a predetermined length forward from the time at which the current presentation of the VOD program is stopped, an end presentation position of the stored segment of the VOD program, and correspondence relationship between them, after receiving a command for stopping the presentation of the VOD program;
a second looking up unit adapted to look for an identifier of a target VOD program, a segment of the target VOD program with the predetermined length and associated with the identifier of the target VOD program, and an end presentation position of the prestored segment of the target VOD program from the contents stored by the second storing unit, after receiving a command for switching to the target VOD program; and
a second sending unit adapted to send a presentation request including the identifier of the target VOD program and the end presentation position associated with the identifier of the target VOD to a VOD server when the second looking up unit finds the identifier of the target VOD program and the end presentation position associated with the identifier of the target VOD.

13. The digital TV device according to claim 12, further comprising:
a presenting unit adapted to present the prestored segment of the target VOD program with the predetermined length and associated with the identifier of the target VOD program, and present the target VOD program from the end presentation position immediately after the presentation of the prestored segment of the target VOD program.

14. The digital TV device according to claim 12 or 13, further comprising:
a prompting unit adapted to prompt the user, via a selecting interface, to select whether to store the information and the correspondence relationship, and/or prompt the user to select whether to start presenting the target VOD program from the end presentation position.
